# EUROPEAN PATENT APPLICATION

(11) **EP 4 060 612 A1**
(43) Date of publication of application: **21.09.2022**
(21) Application number: 21163105.6
(22) Date of filing: 17.03.2021
(51) Int. Cl.: G06T 7/187, G06T 7/194, G06T 7/55

(54) **IMPROVED ORIENTATION DETECTION BASED ON DEEP LEARNING**

(71) Applicant: Robovision, 9052 Zwijnaarde (BE)
(72) Inventor: VERGEYNST, Lidewei, 9052 Zwijnaarde (BE); VAN PARYS, Ruben, 9052 Zwijnaarde (BE); WAGNER, Andrew, 9052 Zwijnaarde (BE); WAEGEMAN, Tim, 9052 Zwijnaarde (BE)
(74) Representative: Rogiest, Wouter

(57) **Abstract**

A method for generating a robot command for handling a 3D physical object present within a reference volume, the object comprising a main direction and a 3D surface, the method comprising: obtaining at least two images of the object from a plurality of cameras positioned at different respective angles with respect to the object; generating, with respect to the 3D surface of the object, a voxel representation segmented based on the at least two images; determining a main direction based on the segmented voxel representation; and the robot command for the handling of the object based on the segmented voxel representation and the determined main direction, wherein the robot command is computed based on the determined main direction of the object relative to the reference volume, wherein the robot command is executable by means of a device comprising a robot element configured for handling the object.

## Description

### Field of the invention

The present invention relates to handling of 3D physical objects by means of robots based on deep learning.

### Background art

Image analysis of 3D objects in the context of robot automation, visualization and 3D image reconstruction is fundamental for enabling accurate handling of physical objects. Image data may be a mere set of 2D images, requiring extensive processing in order to generate appropriate robot commands that take into account the features of the object as well as the requirements of the application.

In particular, a problem with known methods may be to take into account the structure of the object, including the 3D surface, for which the handling may depend critically on the handling portion of the 3D object.

US20190087976A1 discloses an information processing device includes a camera and a processing circuit. The camera takes first distance images of an object for a plurality of angles. The processing circuit generates a three-dimensional model of the object based on the first distance image, and generates an extracted image indicating a specific region of the object corresponding to the plurality of angles based on the three-dimensional model. Thereby, US20190087976A1 discloses examples of estimated gripping locations for coffee cups by deep learning, wherein the deep learning may relate to neural networks such as convolutional neural networks. However, US20190087976A1 does not disclose details of training and using the convolutional neural networks.

EP3480730A1 discloses computer-implemented method for identifying features in 3D image volumes includes dividing a 3D volume into a plurality of 2D slices and applying a pre-trained 2D multi-channel global convolutional network (MC-GCN) to the plurality of 2D slices until convergence. However, EP3480730A1 does not disclose handling of 3D objects.

WO2019002631A1 discloses 3D modelling of 3D dentomaxillofacial structures using deep learning neural networks, and, in particular, though not exclusively, to systems and methods for classification and 3D modelling of 3D dentomaxillofacial structures using deep learning neural networks and a method of training such deep learning neural networks. However, also WO2019002631A1 does not disclose handling of 3D objects.

US20180218497A1 discloses CNN likewise but does not disclose handling of 3D objects.

The document (Weinan Shi, Rick van de Zedde, Huanyu Jiang, Gert Kootstra, Plant-part segmentation using deep learning and multi-view vision, Biosystems Engineering 187:81-95, 2019) discloses 2D images and 3D point clouds and semantic segmentation but does not discloses handling of 3D objects.

The present invention aims at addressing the issues listed above.

### Summary of the invention

According to an aspect of the present invention, a method is provided for generating a robot command for handling a three-dimensional, 3D, physical object present within a reference volume, the object comprising a main direction and a 3D surface. The method comprises obtaining at least two images of the object from a plurality of cameras positioned at different respective angles with respect to the object; generating, with respect to the 3D surface of the object, a voxel representation segmented based on the at least two images, said segmenting being performed by means of at least one segmentation NN, preferably comprising at least one semantic segmentation NN, trained with respect to the main direction; determining the main direction based on the segmented voxel representation; and computing the robot command for the handling of the object based on the segmented voxel representation and the determined main direction, wherein the robot command is computed based on the determined main direction of the object relative to the reference volume, wherein the robot command is executable by means of a device comprising a robot element configured for handling the object.

A main advantage of such a method is the accurate and robust robot control provided by such a method.

In embodiments, the at least one segmentation NN comprises at least one semantic segmentation NN. In embodiments, the at least one segmentation NN comprises at least one instance segmentation NN.

In embodiments, the generating of the voxel representation may comprise determining one or more protruding portions associated with the main direction, wherein the determining of the main direction is based further on the determined one or more protruding portions.

In embodiments, the determining of the main direction may be performed with respect to a geometry of the 3D surface, preferably a point corresponding to a center of mass or a centroid of the object. This may relate to, e.g., sphere fitting with respect to the object.

In embodiments, the method may further comprise determining a clamping portion for clamping the object by means of the robot element, wherein the handling comprises clamping the object based on the clamping portion. This provides an effective clamping of the object by the robot element.

In embodiments, the handling of the object by the robot command may be performed with respect to another object being a receiving object for receiving the object, preferably circumferentially surrounding at least a portion of the object.

In embodiments, the receiving object may comprise a receiving direction for receiving the object, wherein the determining of the clamping portion may be based on the main direction of the object and/or the receiving direction of the receiving object, wherein preferably the handling may comprise orienting the object with respect to the main direction of the object and the receiving direction of the receiving object. Advantageously, the method provides an improved handling of the object, where the object is oriented to be received more precisely by the receiving object.

In embodiments, the object may relate to a plant. In embodiments, the plant is any of a tulip bulb, chicory root, broccoli, ginger, a carrot, a cucumber. Thereby, preferably the main direction may be a growth direction of the plant, and/or the determining of the main direction may be based on an indication of a growth direction provided by the 3D surface. For instance, the growth direction may relate to the growth direction of the tulip bulb, the chicory root, or the broccoli. For the tulip bulb or the chicory root, this may, e.g., relate to orienting the tulip bulb with respect to a second object. For broccoli, this may, e.g., relate to orienting the object in order to separate the florets from the stem. Therefore, the method provides an improved control of a robot element for ensuring that the plant is more effectively handled (e.g., clamped and/or oriented).

In embodiments, the generating of the voxel representation may comprise: 2D segmenting the at least two images by means of said at least one trained semantic segmentation NN being a 2D convolutional neural network, CNN, for determining one or more segment components corresponding to protruding portions of the object in each of the at least two images; performing a 3D reconstruction of the 3D surface of the object based at least on the at least two images for obtaining a voxel representation; obtaining said segmented voxel representation by projecting said one or more segment components with respect to said voxel representation; wherein preferably said obtaining of said segmented voxel representation comprises determining a first portion of the protruding portions associated with the main direction; and/or wherein preferably said 2D segmenting and said projecting relates to confidence values with respect to said segment components being protruding portions, and said determining of the main direction is based on determining a maximum of said confidence, and/or wherein preferably the obtaining of said segmented voxel representation comprises performing clustering with respect to said projected one or more segment components.

Advantageously, the structured and/or unstructured data of the at least two images and/or the voxel representation can be summarized in a more compact representation (i.e., groups, partitions, segments, etc.) for improved segmentation of the data. Furthermore, the data can be used to evaluate a presence of outliers.

In embodiments, the generating of the voxel representation may comprise: performing a 3D reconstruction of the 3D surface of the object based on the at least two images for obtaining a voxel representation; 3D segmenting said voxel representation by means of said at least one semantic segmentation NN being a 3D CNN trained with respect to the main direction; obtaining said segmented voxel representation by determining one or more segment components corresponding to protruding portions of the object in the voxel representation; wherein preferably said obtaining of said segmented voxel representation comprises determining a first portion of the protruding portions associated with the main direction.

In embodiments, said performing of said 3D reconstruction may comprise determining RGB values associated with each voxel based on said at least two images, wherein said 3D segmenting is performed with respect to said voxel representation comprising said RGB values by means of a NN trained with RGB data.

In embodiments, the method may further comprise: obtaining a training set relating to a plurality of training objects, each of the training objects comprising a 3D surface similar to the 3D surface of said object, the training set comprising at least two images for each training object; receiving manual annotations with respect to the main direction from a user for each of the training objects via a GUI; and training, based on said manual annotations, at least one NN, for obtaining said at least one trained NN, wherein, for each training object, said receiving of manual annotations relates to displaying an automatically calculated centroid for each object and receiving a manual annotation being a position for defining said main direction extending between said centroid and said position, wherein preferably, for each training object, said manual annotation is the only annotation to be performed by said user.

In embodiments, the method may further comprise pre-processing the at least two images, wherein the pre-processing comprises at least one of largest component detection, background subtraction, mask refinement, cropping and re-scaling; and/or post-processing the segmented voxel representation in view of one or more semantic segmentation rules relating to one or more segment classes with respect to the 3D surface. Advantageously, the method provides an improved generating of the voxel representation.

In embodiments, said at least one trained 2D CNN may comprise a semantic segmentation NN being a 2D U- net or a rotation equivariant 2D NN. U-net is found to be particularly suitable due to increased speed and/or increased reliability, enabled by data augmentation and elastic deformation, as described in more detail in, e.g., (Ronneberger, Olaf; Fischer, Philipp; Brox, Thomas (2015). "U-net: Convolutional Networks for Biomedical Image Segmentation. arXiv:1505.04597"). Rotation equivariant NNs are known for specific applications, see, e.g., the "e2cnn" software library, see (Maurice Weiler, Gabriele Cesa, General E(2)-Equivariant Steerable CNNs, Conference on Neural Information Processing Systems (NeurIPS), 2019). Applicant has found such rotation equivariant NNs to be particularly useful for objects comprising a main direction, as distinguished from other problems for which a rotation equivariance NN may be less useful.

In embodiments, said at least one trained 3D NN may comprise a semantic segmentation NN being a 3D PointNet++ net or a rotation equivariant 3D NN. PointNet++ is an advantageous choice in that it provides both robustness and increased efficiency, which is enabled by considering neighbourhoods at multiple scales. More detail is provided, e.g., in (Charles R. Qi et al., PointNet++: Deep Hierarchical Feature Learning on Point Sets in a Metric Space, 2017, https://arxiv.org/abs/1706.02413). Rotation equivariant NNs are known for specific applications, see, e.g., "e3cnn" software library, see (Mario Geiger et al, (2020, March 22). github.com/e3nn/e3nn (Version v0.3-alpha). Zenodo. doi:10.5281/zenodo.3723557). Applicant has found this to be particularly advantageous. Indeed, for data in a 3D point cloud representation, the motivation for equivariance is even stronger than in 2D. While a 2D network can at best be equivariant to rotations about the viewing axis, a 3D network can be equivariant to any 3D rotation. The "e3cnn" library, like the "e2nn" library, contains definitions for convolutional layers that are both rotation and translation equivariant.

According to a second aspect of the present invention, a device is provided for handling a three-dimensional, 3D, physical object present within a reference volume, the object comprising a main direction and a 3D surface. The device comprising a robot element, a processor and memory comprising instructions which, when executed by the processor, cause the device to execute a method according to the present invention.

According to a further aspect of the present invention, a system for handling a three-dimensional, 3D, physical object present within a reference volume, the object comprising a main direction and a 3D surface, the system comprising: a device, preferably the device according to the present invention; a plurality of cameras positioned at different respective angles with respect to the object and connected to the device; and a robot element comprising actuation means and connected to the device, wherein the device is configured for: obtaining, from the plurality of cameras, at least two images of the object; generating with respect to the 3D surface of the object, a voxel representation segmented based on the at least two images, said segmenting being performed by means of at least one semantic segmentation NN trained with respect to the main direction; determining a main direction based on the segmented voxel representation; computing the robot command for the handling of the object based on the segmented voxel representation; and sending the robot command to the robot element for letting the robot element handle the object, wherein the plurality of cameras is configured for: acquiring at least two images of the object; and sending the at least two images to the device, wherein the robot element is configured for: receiving the robot command from the device; and handling the object using the actuation means, wherein the robot command is computed based on the determined main direction of the object relative to the reference volume, wherein the robot command is executable by means of a device comprising a robot element configured for handling the object.

Preferred embodiments and their advantages are provided in the description and the dependent claims.

### Brief description of the drawings

The present invention will be discussed in more detail below, with reference to the attached drawings, in which:
Fig. 1 illustrates example embodiments of a method according to the invention;
Fig. 2 provides an overview of example embodiments of a method according to the invention;
Fig. 3 illustrates an image acquisition step of example embodiments of a method according to the invention;
Fig. 4 illustrates an object detection step of example embodiments of a method according to the invention;
Fig. 5 illustrates a protruding portions confidence mask step of example embodiments of a method according to the invention;
Fig. 6 illustrates a 3D protruding portion confidence mask step of example embodiments of a method according to the invention;
Fig. 7 illustrates a 3D annotated point cloud step of example embodiments of a method according to the invention;
Fig. 8 illustrates example embodiments of a method according to the invention with 3D NN;
Fig. 9 illustrates example embodiments of a GUI with 3D annotation;
Fig. 10 illustrates a GUI with 2D annotation;
Fig. 11 illustrates a device according to the invention; and
Fig. 12 illustrates a system comprising the device of Fig. 11 according to the invention.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

The term "reference volume" is to be interpreted as a generic descriptor of the space surrounding the 3D object, wherein a reference volume can be defined according to a three-dimensional reference system, such as Cartesian coordinates in three dimensions. This term does not imply any constraint with respect to these dimensions.

The term "U-net" may relate to the CNN as described in, e.g., (Ronneberger, Olaf; Fischer, Philipp; Brox, Thomas (2015). "U-net: Convolutional Networks for Biomedical Image Segmentation. arXiv:1505.04597") and (Long, J.; Shelhamer, E.; Darrell, T. (2014). "Fully convolutional networks for semantic segmentation". arXiv:1411.4038).

Neural networks (NN) need to be trained to learn the features that optimally represent the data. Such deep learning algorithms includes a multilayer, deep neural network that transforms input data (e.g. images) to outputs while learning higher level features. Successful neural network models for image analysis are semantic segmentation NNs. One example is the so-called convolutional neural network (CNN). CNNs contain many layers that transform their input using kernels, also known as convolution filters, consisting of a relatively small sized matrix. Other successful neural network models for image analysis are instance segmentation NNs. As known to the skilled person, instance segmentation NNs differ from semantic segmentation NNs in terms of algorithm and output, even in cases where the input, e.g. the images, are identical or very similar.

In general, semantic segmentation may relate, without being limited thereto, to detecting, for every pixel (in 2D) or voxel (in 3D), to which class of the object the pixel belong. Instance segmentation, on the other hand, may relate, without being limited thereto, to detecting, for every pixel, a belonging instance of the object. It may detect each distinct object of interest in an image. In embodiments, 2D instance segmentation, preferably operating on 2D images, relates to SOLO, SOLOv2, Mask R-CNN, DeepMask, and/or TensorMask. In embodiments, 3D instance segmentation, preferably operating on a 3D point cloud generated from 2D images, relates to 3D-BoNet and/or ASIS.

The term neural network, NN, refers to any neural network model. The NN may comprise any or any combination of a multilayer perceptron, MLP, a convolutional neural network, CNN, and a recurrent neural network, RNN. A trained NN relates to training data associated with a neural network based model.

In embodiments, the at least one trained NN is rotation equivariant. In embodiments, the NN is translation and rotation equivariant.

In many applications, the objects of interest do indeed always appear in the same orientation in the image. For example, in street scenes, pedestrians and cars are usually not "upside down" in the image. However, in applications where a main direction is to be determined, there is no such predetermined direction; and the object appears in a variety of orientations.

In embodiments with a 2D rotation equivariance NN, U-Net-like architectures are preferred, preferably based on rotation equivariant operators from (Maurice Weiler, Gabriele Cesa, General E(2)-Equivariant Steerable CNNs, Conference on Neural Information Processing Systems (NeurIPS), 2019). In embodiments with a 2D NN, Furthermore, some of the translational equivariance that is lost in typical naive max pooling downsampling implementations is recovered based on the method disclosed in (Richard Zhang. Making Convolutional Networks Shift-Invariant Again, International Conference on Machine Learning, 2019).

In embodiments, the NN involves only equivariant layers. In embodiments, the NN involves only data augmentation. In embodiments, the NN involves both equivariant layers and data augmentation.

In embodiments with a 3D rotation equivariance NN, the NN preferably comprises one or more neural network architectures based on the "e3cnn" library, see (Mario Geiger et al, (2020, March 22). github.com/e3nn/e3nn (Version v0.3-alpha). Zenodo. doi:10.5281/zenodo.3723557). The "e3cnn" library, like the "e2nn" library, contains definitions for convolutional layers that are both rotation and translation equivariant.

In embodiments, the pre-processing 12 comprises projecting the original image and/or the black and white image/mask to a 3D surface, for example, performing a 3D reconstruction (e.g., voxel carving) of the 3D surface of the object 1 based on at least the two or more images. The voxel representation may allow the generation of one or more foreground and/or background masks through projection.

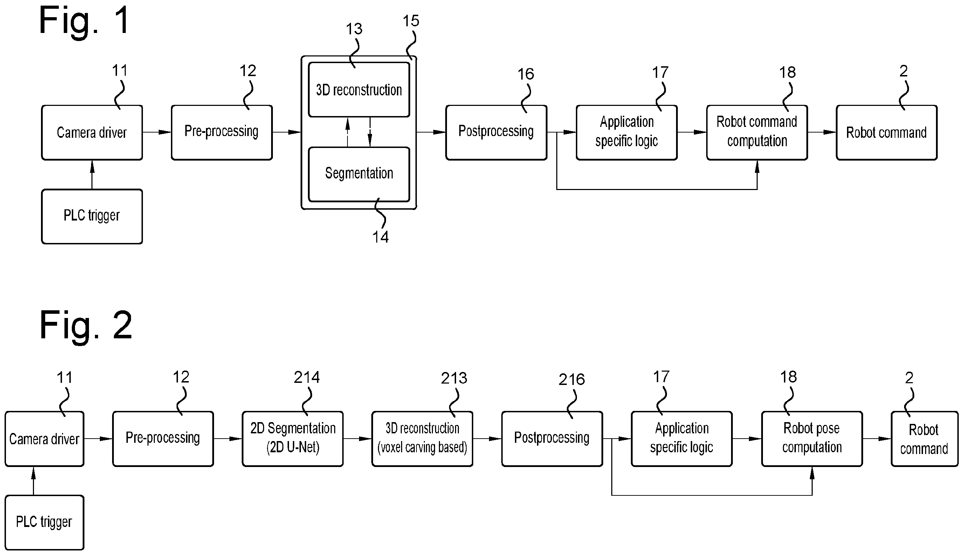

Example embodiments of a method for orienting a 3D physical object will be described with reference to Figs. 1-10.

### Example 1: example embodiments according to the invention

Examples of an object 1 with a main direction is an object comprising a symmetry with respect to a symmetry axis being the main direction; particular examples are plant bulbs. Other examples may be objects having a direction with respect to which the diameter of the object is minimized or maximized, e.g. the length direction of an elongate object; particular examples are chicory roots, broccoli, ginger, carrots, cucumber, etc. It must be noted that the present invention is not limited to afore-mentioned examples. Other examples of objects will be understood by a skilled person, preferably relating to plants, wherein the main direction relates to a growth direction of the plant.

Fig. 1 illustrates an example embodiment of a method according to the invention. It relates to a method for generating a robot command 2 for handling a three-dimensional, 3D, physical object 1 present within a reference volume, the object 1 comprising a main direction and a 3D surface.

The embodiment of Fig. 1 comprises a step of, based on Programmable Logic Controller (PLC), obtaining 11 at least two images 30 of the object 1 from a plurality of cameras 3 or camera drivers positioned at different respective angles with respect to the object 1.

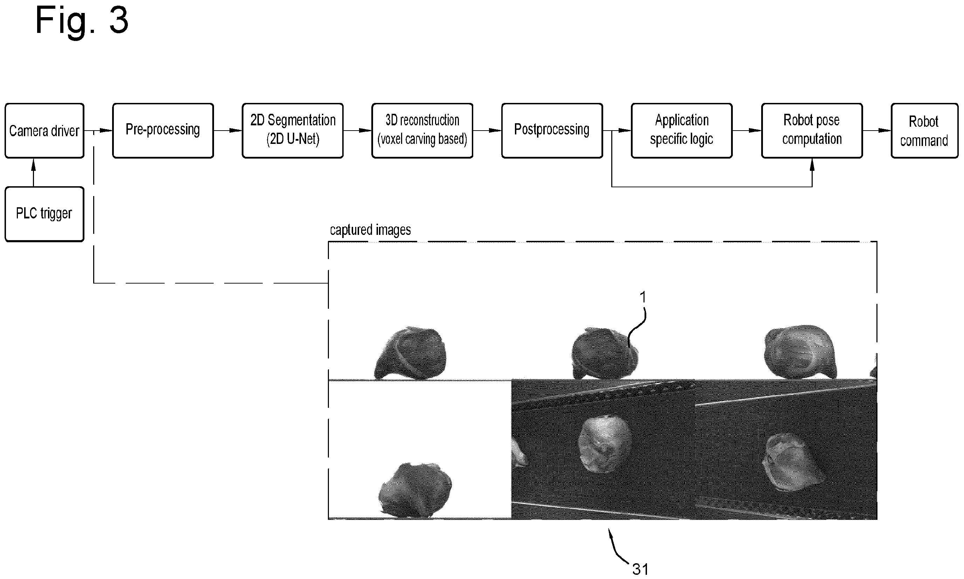

The invention involves obtaining at least two images 30 of the physical object 1. The number of images being at least two relates to the number of images required to create a convex voxel representation with a non-infinite size also being at least two. However, it may be clear that a larger number of images may result in higher accuracy for the voxel representation and/or improved ability to handle objects with non-convex and/or irregular shape. The number of images obtained may be two, three, more than three, four, or more than four. For instance, the number of images may be six, as in the case of the embodiments with reference to Figs. 3-5.

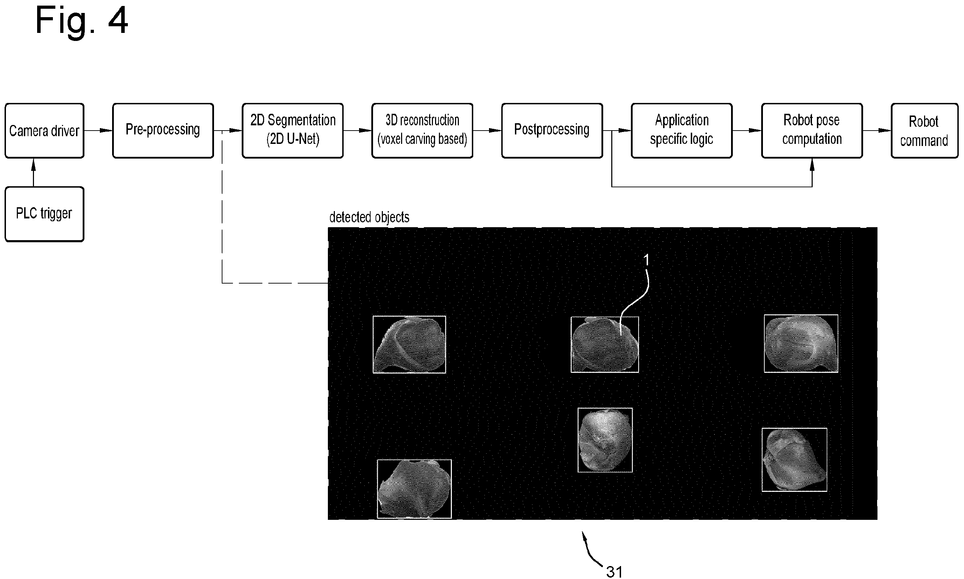

Each of the images 30 may be processed, which may preferably be an application-specific processing. Thus, the method may further comprise a step of pre-processing 12 the at least two images 30, the pre-processing preferably comprising at least one of largest component detection, background subtraction, mask refinement, cropping and re-scaling. A detailed example will be described below with reference to Fig. 4.

Following the step of obtaining 11 or pre-processing 12, the method comprises the step of generating 15, with respect to the 3D surface of the object 1, a voxel representation segmented based on the at least two images 30.

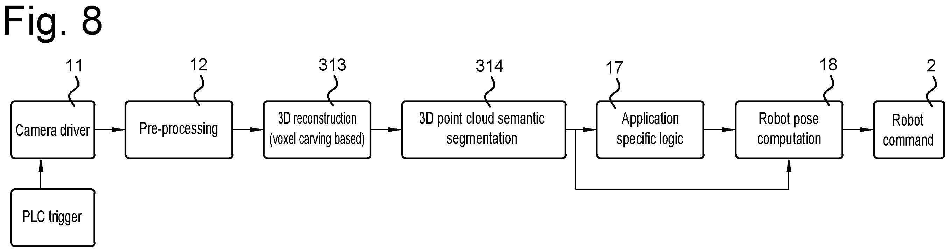

In the example embodiments of Fig. 1, the step of generating 15 comprises the step of segmenting 14 the 3D surface of the object 1 by means of at least one trained neural network, NN, as well as the step of performing 13 a 3D reconstruction of the 3D surface of said object 1. Fig. 1 covers several embodiments where the step of segmenting 14 may be performed before and/or after the step of performing 13. These embodiments will be described in more detail below with reference to Figs. 2 and 8.

In embodiments, said segmentation, preferably comprising semantic segmentation NN, comprises any one or any combination of: 2D U-net, 3D U-net, Dynamic Graph CNN (DGCNN), PointNet++. In preferred embodiments, semantic segmentation in two dimensions is done with a convolutional neural network, CNN. In alternative embodiments, instead of a 2D CNN, also a 2D NN that is not convolutional may be considered. In preferred embodiments, segmentation in three dimensions is done with a neural network that may either be convolutional, such as a DGCNN, or non-convolutional, such as PointNet++. In embodiments, another variant of PointNet++ relating to PointNet may be considered without altering the scope of the invention. In preferred embodiments, semantic segmentation with a 2D CNN relates to U-net. In preferred embodiments, semantic segmentation with a 3D NN relates to DGCNN or PointNet++. Herein, DGCNN may relate to methods and systems described in (Yue Wang et al., Dynamic Graph CNN for Learning on Point Clouds, CoRR, 2018, http://arxiv.org/abs/1801.07829), and PointNet++ may relate to methods and systems described in (Charles R. Qi et al., PointNet++: Deep Hierarchical Feature Learning on Point Sets in a Metric Space, 2017, https://arxiv.org/abs/1706.02413).

In embodiments, said segmentation, preferably comprising instance segmentation NN, comprises any one or combination of: SOLO, SOLOv2, Mask R-CNN, DeepMask, and/or TensorMask. In preferred embodiments, instance segmentation with a 3D NN relates to 3D-BoNet and/or ASIS.

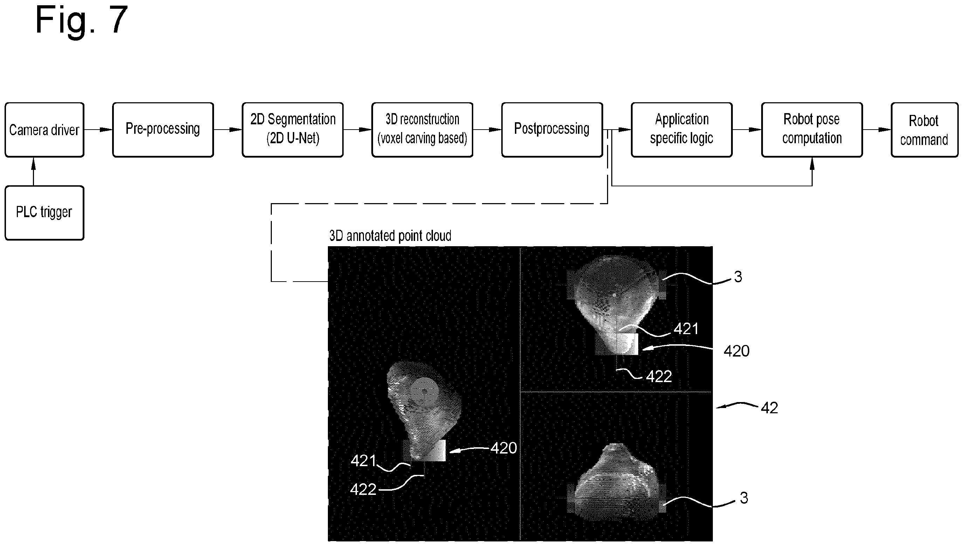

In the example embodiments of Fig. 1, following the step of generating 15, the method comprises the step of post-processing 16, which relates for instance to continuity checks and/or segmentation checks. Preferably, the segmented voxel representation is post-processed in view of one or more segmentation rules relating to one or more segment classes with respect to the 3D surface. The step of post-processing 16 will be described in more detail below with reference to Fig. 7.

In the example embodiments of Fig. 1, the step of post-processing 16 comprises the step of determining (not shown) a main direction based at least on the segmented voxel representation.

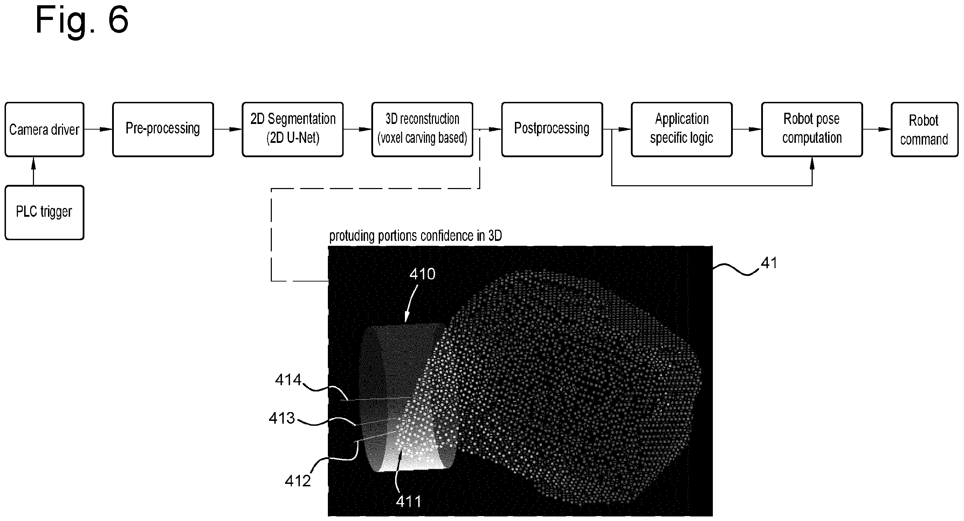

A next step relates to application specific logic 17, wherein details of actuating the robot element 4 for handling the object 1 may be determined. This may relate for instance to single actions (e.g. clamping/gripping only), or combined actions (e.g. clamping/gripping and orienting), as will be described in more detail below with reference to Figs. 6 and 7.

In a final step, the robot command 2 for the handling of the object 1 is computed 18 based on the segmented voxel representation. Herein, the robot command 2 is based on a determined main direction of the object 1 relative to the reference volume. Furthermore, the robot command 2 is executable by means of a device comprising a robot element 4 configured for handling the object 1.

Thereby, the handling of the object 1 by the robot command 2 may relate to an actuation of the robot element 4 based on the determined main direction. Preferably, said NN comprises any one or combination of a (2D and/or 3D) U-net, a (2D and/or 3D) RotEqNet, a PointNet++ and a Dynamic Graph CNN (DGCNN).

### Example 2: example embodiments with 2D segmentation according to the invention

Figs. 2-7 illustrate steps of example embodiments of a method which correspond in many aspects and/or features to the method of the embodiments of Fig. 1, particularly with respect to the image acquisition 11, pre-processing 12, image generation 15, application specific logic 17 and the robot pose computation 18.

In the example embodiment of Fig. 2, the step of generating 15 the segmented voxel representation comprises a 2D segmentation 214 of the at least two images 30 by means of at least one trained 2D CNN, preferably a 2D U-net. Following the step 2D segmenting 213, the generating 14 further comprises performing 213 a 3D reconstruction of the 3D surface of the object 1, preferably the 3D reconstruction is based on voxel carving.

In the example embodiments of Fig. 3-7, the object 1 is a plant bulb present in the reference volume.

Fig. 3 illustrates an image acquisition step of example embodiments of a method according to the invention. The image acquisition may be triggered by a PLC trigger. In this example embodiment, six images of the object 1 are acquired.

Fig. 4 illustrates a pre-processing step of example embodiments of a method according to the invention. The following is an example of pre-processing to which the invention is not limited. The images may be processed in monochrome. Each image may be subjected to a threshold to convert them into black and white images, which may be provided as a black and white foreground mask, replacing the original images or in addition thereto. Other mask refining techniques known in the art may be used. A background may be detected in the original image and/or the black and white image/mask and subtracted therefrom if necessary. The object 1 may then be detected as the largest connected component in the original image and/or the black and white image/mask. The object detection may also be known as Connected-component labelling (CCL), connected-component analysis (CCA), blob extraction, region labelling, blob discovery, or region extraction. Furthermore, the image or mask may be cropped to only include the object 1. Furthermore, the image or mask, preferably the cropped image or mask may be scaled to a predetermined resolution. The original image may be first scaled, and then re-scaled after performing any of the above pre-processing steps. The predetermined resolution is preferably lower than the resolution of the original image. Algorithms known in the art may be used in image (re-)scaling, such as nearest-neighbour interpolation, vectorization, deep convolutional neural networks, etc. In embodiments, upon detecting the object 1, a background may be detected in the original image or the black and white image/mask and subtracted from said image or mask.

In embodiments, the pre-processing 12 is performed on the at least two images 30 based on a mask projection for distinguishing foreground from background, said mask projection being based at least partially on a mask-related 3D reconstruction of the 3D surface of the object 1, preferably being said voxel representation.

In embodiments, the pre-processing 12 comprises projecting the original image and/or the black and white image/mask to a 3D surface, for example, performing a 3D reconstruction (e.g., voxel carving) of the 3D surface of the object 1 based on at least the two or more images. The voxel representation may allow the generation of one or more foreground and/or background masks through projection. For instance, the voxel representation may be projected onto a 2D surface, for example, generating, with respect to the original image and/or black and white image/mask, at least two images having foreground and background masks, preferably only foreground masks. Said at least two images may then be fed to the next step of 2D segmenting 214 said at least two images (i.e., having foreground masks or additionally background masks) for determining one or more segment components corresponding to, e.g., protruding portions of the object 1 in each of said at least two images or the original images 30. Thus, the foreground and background masks can be more precisely segmented. Furthermore, noise can be more effectively suppressed/handled in the at least two images.

Advantageously, the pre-processing 12 allows to determine and suppress noise in the at least two images 30, for instance noise resulting from an obstruction. For said suppression it suffices that at least one camera from among the plurality of cameras 3 is not impacted by said noise. This may relate to a source of noise not being present and/or in the field of view of said at least one camera.

In the example embodiment of Fig. 4, the acquired six images 30, as described with reference to Fig. 3, are pre-processed, wherein at least the object 1 is detected in each image, the background is subtracted from each image (shown as a dark background), the images are cropped (shown as a rectangle around the object 1) and scaled. In preferred embodiments, the resolution is kept low to keep processing speed high, working at resolutions such as (in pixels) 56 x 56, 64 x 64, 112 x 112, 128 x 128, 224 x 224, 256 x 256, etc.

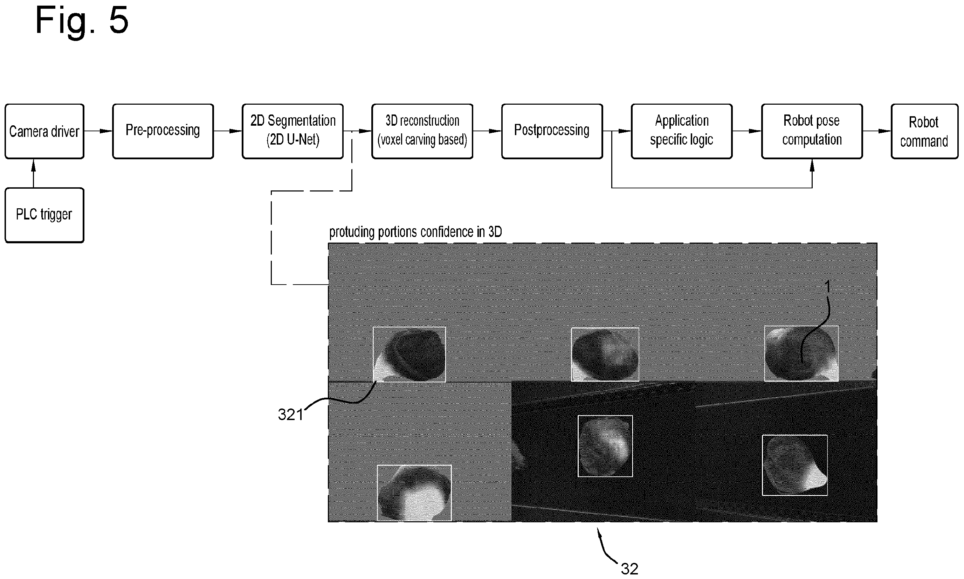

Fig. 5 illustrates protruding portions confidence mask step of example embodiments of a method according to the invention. In the example embodiment of Fig. 5, the six images 30; 31, as described with reference to Fig. 3 or Fig. 4, are segmented by means of at least one trained 2D CNN, in this case a 2D U-net.

Each of the 2D U-nets processes the images 30; 31 to generate per-class probabilities for each pixel of each image, each class corresponding to one of a plurality of segment classes. In this example, the segment class corresponds to protruding portions 321 of the object 1. The protruding portions U-net generates a first probability map, wherein each pixel of the object (e.g. foreground pixel) is assigned a probability value according to its probability of belonging to a protruding portion. This results in six confidence masks 32 for the protruding portions segment class, each mask corresponding to an input image.

In the example embodiment of Fig. 5, the step of generating 15, preferably, the step of segmenting 14; 214, comprises determining one or more segment components 321 corresponding to protruding portions of the object 1 in each of the at least two images 30; 31. As shown in Fig. 5, the protruding portions 321 are shown as a protrusion portions confidence mask in 2D. This segmenting, which essentially boils down to "painting" portions of the 2D images according to an appropriate segment class, may for instance relate to transforming the plurality of confidence masks into segment masks by setting the segment class of each pixel according to averaging, but also other ways of assigning segment classes may be used, such as assigning to the class with the highest probability.

In embodiments, the determined one or more protruding portions 321 are associated with the main direction of the object 1. Thus, the step of determining of the main direction is based further on the determined one or more protruding portions. Furthermore, the main direction may be determined with respect to a geometry of the 3D surface, preferably a point corresponding to a center of mass or a centroid of the object 1.

Furthermore, the step of generating 15, preferably, the step of segmenting 14; 214, may further comprise determining a first portion of the protruding portions associated with the main direction of the object 1 in each of the at least two images 30; 31. The first portion is associated with a clamping portion for clamping the object 1 by means of the robot element 4. Preferably, the handling of the object 1 comprises clamping the object 1 by a clamping means based on the clamping portion. In embodiments, the step of determining the main direction may be further based on the determined first portion.

In alternative embodiments, the step of determining the main direction may be based on any one or combination of: the determined one or more segment components or protruding portions 321, a texture change, a color change, a marking and a distinguishing feature. In embodiments, the object 1 is substantially spherically shaped. For example, the object 1 is a golf ball, a pool or billiards ball, a ping pong ball, marble ball, etc. Examples of a texture change comprise the dimples on a golf ball, examples of a color change comprise the change in color in a pool or billiard ball (e.g. change to a white color), and examples of a marking comprise a colored dot, a label or a brand name on a ping pong or golf ball, a number on a pool or billiard ball. Other distinguishing features, will be understood by a skilled person as relating to a features that distinguishes it from a main part of the object 1, wherein the marking and/or distinguishing feature may be an indication of the main direction. For instance, the main direction may be the direction extending from the centroid of the object 1 to the marking, preferably to a center of said marking. Furthermore, the step of determining the first portion of the protruding portions may be based on the determined main direction.

In embodiments, the main direction being determined comprises determining the marking on the object 1. In alternative embodiments, the main direction being determined consists of determining the marking on the object 1, instead of determining the protruding portions 321.

Using larger trainable parameters for the NN may result in better inference than when using smaller trainable parameters, however, a resulting inference time would be much longer than necessary. Therefore, the inventors have found an effective balance of up to 3 million trainable parameters and an inference time of at most 47 ms. It is to be noted that the invention is not limited to the afore-mentioned number of trainable parameters and/or inference time.

Fig. 6 illustrates a 3D protruding portion confidence mask step of example embodiments of a method according to the invention.

In the example embodiment of Fig. 6, the step of performing 13; 213 3D reconstruction comprises a 3D protruding portion confidence mask step. Here, a 3D annotated point cloud 41 is shown. The 3D reconstruction is based on voxel carving for performing the 3D reconstruction, along with segmentation based on the confidence masks. This segmenting, which essentially boils down to "painting" portions of the 3D reconstructed surface according to the appropriate segment class, may for instance relate to transforming the plurality of confidence masks into segment masks by setting the segment class of each pixel according to averaging, but also other ways of assigning segment classes may be used, such as assigning to the class with the highest probability.

As shown in Fig. 6, the one or more protruding portions 411 are shown as a protrusion portion(s) confidence mask in 3D, following the step of 3D construction 13; 213, however, this may be performed following the step of post processing 16; 216.

The step of determining the one or more segment components may comprise a step of performing clustering of the at least two images 30; 31. Several clustering approaches exist, such as density-based, distribution-based, centroid-based and hierarchical-based. Examples of these approaches are K-means, density-based spatial clustering (DBSCAN), Gaussian Mixture Model, Balance Iterative Reducing and Clustering using Hierarchies (BIRCH), Affinity Propagation, Mean-Shift, Ordering Points to Identify the Clustering Structure (OPTICS), Divisive Hierarchical clustering, Agglomerative Hierarchy, Spectral Clustering, etc.

Fig. 7 shows a further step of post-processing 16; 216. In the post-processing, features of the considered object 1 may be taken into account to improve the segmentation. For instance, this may include a check for the main direction 421 and/or protruding portions, wherein the first protruding portion may be determined to not be associated with the main direction or not. This may furthermore relate to semantic checks, wherein the number of protruding portions and their mutual positions and/or their positions with respect to the main direction are determined, checked for validity and preferably corrected. Alternatively or additionally, the main direction 421 may be determined, checked for validity and/or corrected, based on an indication of a growth direction provided by the 3D surface and/or on the number of protruding portions and their mutual positions and/or their positions with respect to each other.

Furthermore, the main direction 421 may be determined, checked for validity and/or corrected further based on a point with respect to a geometry of the 3D surface (e.g., within the 3D surface), preferably the point corresponding to a center of mass or a centroid of the object 1.

In embodiments, the at least one trained semantic segmentation NN used for generating the voxel representation segmented based on the at least two images relates to a trained 3D neural network, preferably PointNet++ or a 3D rotation equivariant NN, more preferably RotEqNet.

In further embodiments, the post-processing 16; 216 may alternatively or additionally comprise processing the segmented voxel representation according to a Rotation Equivariant Vector Field Network (RotEqNet) NN. This relates to applying one or more trained RotEqNet NN to the segmented voxel representation. This is particularly useful when the object comprises a main direction, as the RotEqNet NN enables to process the segmented voxel representation such that the main direction is taken into account, leading to a more reliable computation of the robot command 2. This may relate to embodiments wherein, e.g., the generating 15 is performed by means of a trained 2D U-net, and the post-processing involving a RotEqNet NN.

As shown in Fig. 7, a 3D annotated point cloud 42 is shown, following the step of post processing 16; 216, however, this may be performed following the step of 3D construction 13; 213.

With reference to Figs. 6 and 7, an intention of this invention is to orient the object 1 with respect to another object 3 by executing a robot command 2, preferably, the orienting of the object 1 by the robot command 2 relates to fitting a portion corresponding to a distal portion relative to the first portion 411 of the object 1 within the other object 3.

In embodiments, the other object 3 is a receiving object for receiving the object 1, preferably circumferentially surrounding at least a portion of the object 1. A cross-section of the other object 3 is shown in Fig. 7, where the other object 3 circumferentially surrounds the distal portion relative to the clamping portion 420 of the object 1.

In embodiments, the receiving object 3 may comprise a receiving direction 413; 422 for receiving the object 1. Furthermore, the clamping portion 410; 420 may be determined based on the main direction 412; 422 of the object 1 and the receiving direction 413; 422 of the receiving object 3. Furthermore, the object 1 may be oriented with respect to the main direction 412; 422 of the object 1 and the receiving direction 413; 422 of the receiving object 3.

With reference to Fig. 6, the robot command 2 may comprise an approaching or clamping direction 414 and/or a clamping position on the surface of the object 1, wherein the approaching or clamping direction 414 and/or a clamping position may be determined based on any one or combination of the clamping portion 411, the main direction 412 and the receiving direction 413. The approaching or clamping direction 414 may be a symmetry axis of the clamping portion 410. Alternatively, the clamping portion 411 may be determined based on any one or combination of the approaching or clamping direction 414, the main direction 412 and the receiving direction 413. The approaching or clamping direction 414 may be a symmetry axis of the clamping portion 410.

In embodiments, the clamping means comprises at least two clamping elements, for e.g., two, three, four or five. The at least two clamping elements may relate to fingers of a claw-like element (e.g., the robot element 4). In Fig. 7, a problem of slipping of the object 1 during clamping is illustrated, for example, due to not clamping the object 1 on a parallel surface. In embodiments, the clamping means may be used to suppress movement of the object 1 while clamping of said object 1. For example, the at least two clamping elements making contact with the object 1 simultaneously, such that the object 1 does not move while clamping. In embodiments, the clamping means is configured such that the at least two clamping elements make contact with the object 1 simultaneously.

In embodiments, the clamping means comprises a suction means. The suction means may relate to a ring-shaped element or other elements that circumferentially surround at least a portion of the object 1 and may relate to the clamping portion 410; 420.

As shown in Fig. 7, the receiving direction 422 and the main direction 421 are not necessarily based on the same point within the 3D surface, i.e., the center of mass or the centroid of the object 1. Furthermore, the receiving direction 413; 422, which may correspond to a symmetry axis of the other object 3, preferably being a main direction of the other object 3.

In the examples of the embodiments according to the present invention, the object 1 is a plant bulb present within the reference volume, the plant bulb is oriented such that a next process step can be performed on the plant bulb; particular examples are more visually appealing packaging of the plant bulb(s), more efficient and/or effective planting of the plant bulb in soil (e.g. a pot), more efficient packaging of a plurality of plant bulbs, etc. To this end, the robot element 4 may be a robot clamping/gripping means that approaches the object 1 and clamps/grips the object 1, according to the robot command 2, at an appropriate position (e.g., the clamping position) such that the object 1 may be oriented with respect to the other object 3. Particularly, the robot command 2 may comprise an approaching angle and/or a clamping angle, i.e. each comprising a set of three angles, e.g., alpha, beta and gamma, indicating the angle from which the robot element 4 should approach and/or clamp the object 1. The robot command 2 may be computed further on a point within the reference volume, wherein the point corresponds to a clamping reference point on the 3D surface of the object 1. The reference point may be determined based on the clamping angle and/or the clamping direction 414, for e.g., the point may be provided on a line formed by the clamping direction 414 (as shown in Fig. 6). The reference point may be a set of three coordinates, e.g., x, y, z, within the reference volume.

### Example 3: example embodiments with 3D segmentation according to the invention

Fig. 8 illustrates example embodiments of a method according to the invention with 3D NN. Fig. 8 illustrates steps of example embodiments of a method which correspond in many aspects and/or features to the methods of the embodiments of Figs. 2-7, particularly with respect to the image acquisition 11, pre-processing 12, application specific logic 17 and the robot pose computation 18. However, instead of using 2D U-nets, the output of the thresholding step is fed directly to the 3D reconstruction step 313, which generates an unsegmented 3D voxel representation. This voxel representation is then fed into a 3D point cloud semantic segmentation step 314, which relates to one or more 3D trained NNs, for instance a 3D main stem NN and a 3D branch point NN, wherein the NNs preferably comprise PointNet++ or DGCNN. While Fig. 8 does not display post-processing, the step of 3D point cloud semantic segmentation 314 may include post-processing along the lines of the embodiments of Figs. 2-7, including e.g. a continuity check for the protruding portion(s) and/or semantic checks, wherein the number of protruding portions and their mutual positions and/or their positions with respect to the main direction 421 are determined, checked for validity and preferably corrected. Alternatively or additionally, the main direction 421 may be determined, checked for validity and/or corrected, based on an indication of a growth direction provided by the 3D surface and/or on the number of protruding portions and their mutual positions and/or their positions with respect to each other. The result thereof may again be fed to the further steps, similar to the example embodiments of Figs. 2-7.

### Example 4: example embodiments with 2D and 3D segmentation according to the invention

These example methods are essentially a combination of embodiments in Example 2 and Example 3, wherein the input of the 3D reconstruction step not only includes images after pre-processing 12, but also confidence masks output by, for e.g. one or more U-nets or 2D RotEqNets. The voxel representation generated accordingly may already comprise a preliminary segmentation, which may be further improved by applying one or more 3D trained NNs, for instance a 3D main direction PointNet++, 3D RotEqNet or DGCNN. The combined use of 2D NNs and 3D NNs for semantic segmentation may lead to enhanced accuracy and/or robustness.

### Example 5: examples of GUI with 2D and 3D annotation according to the invention

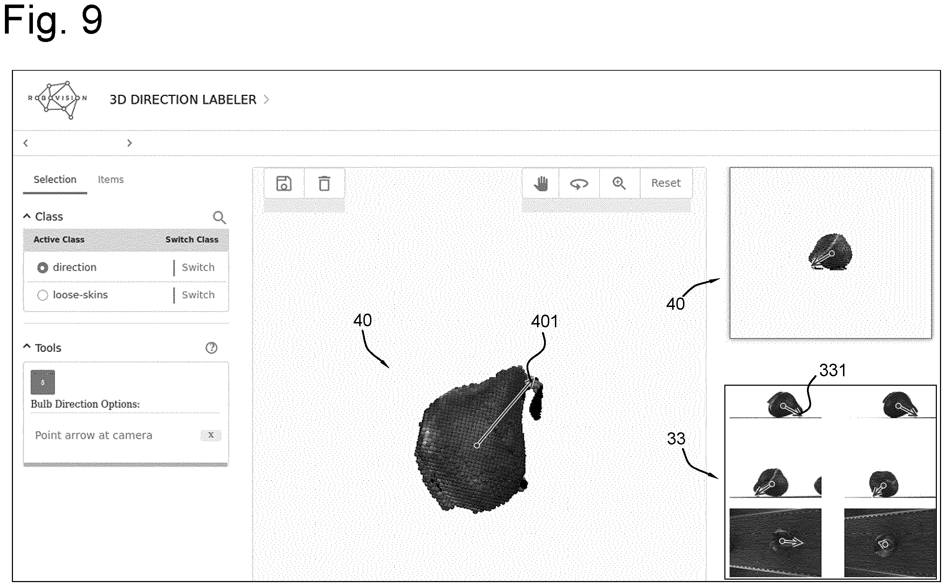

Fig. 9 illustrates example embodiments of a GUI 101 with both 2D and 3D annotation. The GUI 101 may be used for training of any NN, preferably a 2D U-net or a 3D PointNet++ or a 3D DGCNN or a RotEqNet, such as the CNNs described with reference to Figs. 2-7. The GUI 101 operates on a training set relating to a plurality of training objects, in this example a training set with images of several hundred plant bulbs, with six images for each bulb taken by six cameras from six different angles. Each of the training objects comprises a 3D surface similar to the 3D surface of the object 1 for which the NN is trained, i.e. another plant bulb.

However it should be noted that the NN, when trained for a bulb, may also be used for other plants comprising a main direction (e.g. a growth direction), even if the training set did not comprise any training objects other than bulbs.

The GUI 101 comprises at least one image 33 and allows to receive manual annotations 331 with respect to at least one segment class from a user of said GUI 101 for each of the training objects. Particularly, the at least one segment class relates to a main direction (e.g., a growth direction) depicted in such a way that it is visually distinguishable, e.g., by means of a different color and/or shape. In this example, for instance, a different color is used than that of the object 1 in each of the at least one image 33, and the main direction is marked by a vector or arrow on each of the at least one image 33.

The annotated at least one image 33 may be used to generate an annotated 3D reconstruction of the 3D surface of the object 1. For example, the at least one segment depicted on each of the at least one image 33 may be projected on the 3D reconstruction view 40.

The GUI allows to receive manual annotations of the entire test set. In a next step, the manual annotations 331; 401 may be used to train at least one NN. In the case of the CNNs of the example embodiments of Figs. 2-7, this corresponds to the trained main branch U-net and the trained main stem U-net.

The GUI 101 comprises a 3D reconstruction view 40 of the 3D surface of the object 1, and allows to receive manual annotations 401 with respect to at least one segment class from a user of said GUI 101 for each of the training objects. Particularly, the at least one segment class relates to a main direction (e.g., a growth direction) depicted in such a way that it is visually distinguishable, e.g., by means of a different color and/or shape. In this example, for instance, a different color is used than that of the 3D constructed object, and the main direction is marked by a vector or arrow on the 3D reconstruction view 40. A plurality of image views may be provided by the GUI upon request of the user, for e.g., by rotating the 3D construction to arrive at another image view than the 3D reconstruction view 40 shown in Fig. 9.

In the embodiment of Fig. 9, the 3D reconstruction view 40 is displayed along with at least one image view 33. The GUI 101 lets the receipt of a manual 401 from the user via one of said 3D reconstruction view 40 and one of said at least one image view 33 cause the other one of said 3D reconstruction view 40 and one of said at least one image view 33 to be updated according to said manual annotation 401; 331. This relates to automatically projecting the manual annotation of an image to a 3D voxel representation, or vice versa. This is advantageous since it leads to more user-friendly and/or more accurate and/or faster manual annotation by the user.

The annotated 3D reconstruction view 40 of the 3D surface of the object 1 may be used to generate annotated at least one image 33. For example, the at least one segment depicted on the 3D reconstruction view 40 may be projected on the at least one image 33, as illustrated in Fig. 9. This is advantageous since it leads to more user-friendly and/or more accurate and/or faster manual annotation by the user.

In embodiments, the method may further comprise the steps of (not shown) obtaining a training set relating to a plurality of training objects 33; 40, each of the training objects comprising a 3D surface similar to the 3D surface of said object 1, the training set comprising at least two images for each training object; and receiving manual annotations 331; 401 with respect to a plurality of segment classes from a user for each of the training objects via a GUI 101. Automatic annotations may be determined from the manual annotations 331; 401, as described above. Furthermore, the method further comprises training, based on said manual or automatic annotations 331; 401, at least one NN, for obtaining said at least one trained NN.

### Example 6: example of GUI with 2D annotation according to the invention

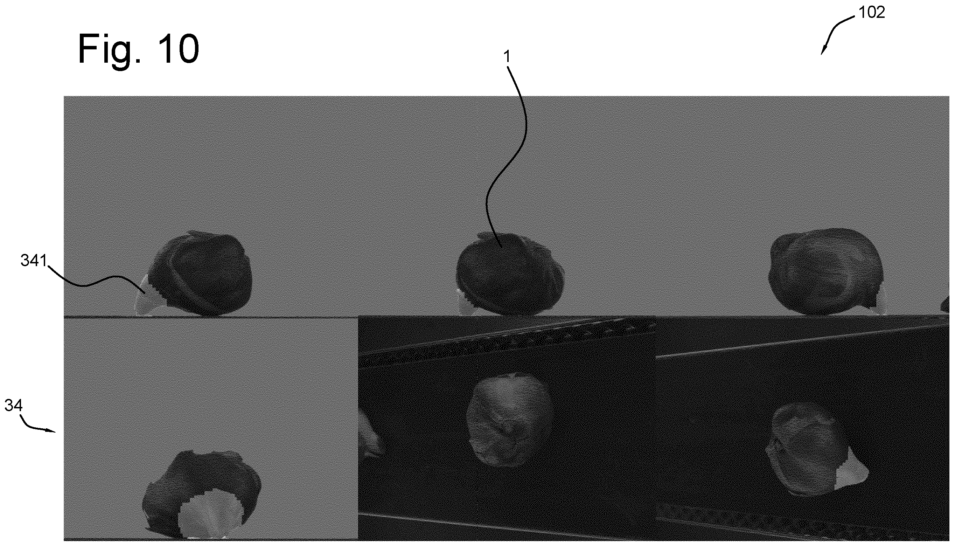

Fig. 10 illustrates a GUI 102 with 2D annotation 341. The 2D annotation relates to one or more protrusion portions, preferably to the first portion associated with the clamping portion. Said 2D annotations 341 may be projected onto the 2D images 34 to allow the user to intuitively check whether what the NN is sound.

In embodiments, the GUI 101 shown in Fig. 9 may be used to provide only 2D annotations 341. Furthermore, the 2D annotations 341 relating to the one or more protruding portions may be based on the 2D and/or the 3D annotations 331; 401 relating to the main direction.

### Example 7: example of GUI with 3D annotation according to the invention

In embodiments, the GUI 102 shown in Fig. 10 may be used to provide a 3D annotation. The 3D annotation relates to one or more protrusion portions, preferably to the first portion associated with the clamping portion. Said 3D annotation may be projected onto the 3D voxel representation to allow the user to intuitively check whether what the NN is sound, for example the annotated voxel representation 41 shown in Fig. 6.

In embodiments, the GUI 101 shown in Fig. 9 may be used to provide only 3D annotations. Furthermore, the 3D annotations relating to the one or more protruding portions may be based on the 2D and/or the 3D annotations 331; 401 relating to the main direction.

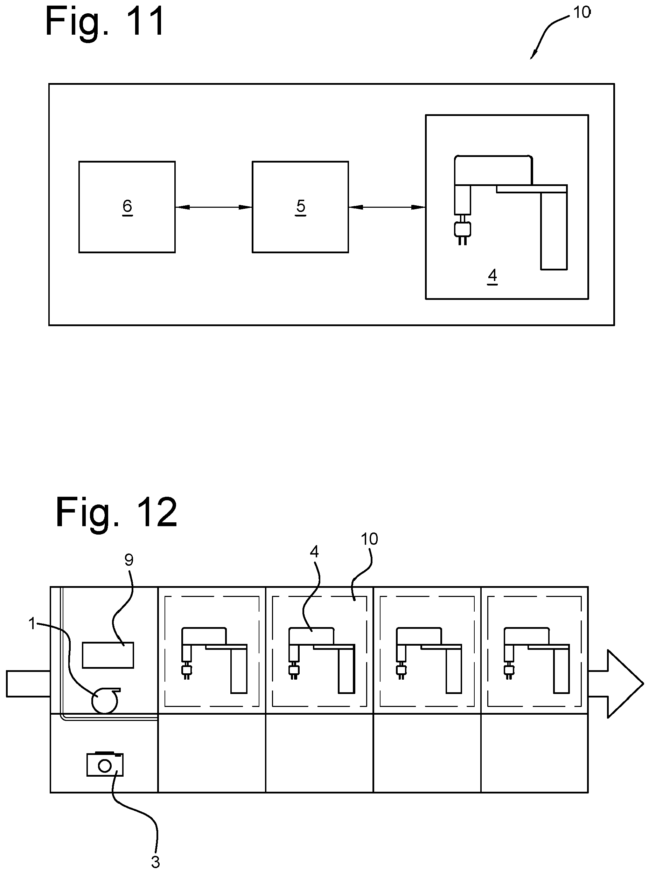

Example embodiments of a device and a system for orienting a 3D physical object will be described with reference to Figs. 11-12.

### Example 8: examples of a device according to the invention

An embodiment of a device 10 according to the present invention will be described with reference to Fig. 11. Fig. 11 shows a device comprising a robot element 4, a processor 5 and memory 6. The memory 6 may comprise instructions which, when executed by the processor 5, cause the device 10 to execute a method according to any embodiment of the present invention. The processor 5 may additionally or alternatively comprise the instructions.

The device 10 may comprise one or more robot elements 4 electrically connected to the processor 5. The one or more robot elements 4 may comprise actuation means, and the one or more robot elements 4 may be configured to handle a physical object 1 using the actuation means upon receiving a robot command 2 from the processor 5.

### Example 9: examples of a system according to the invention

An embodiment of a system for handling a 3D physical object will be described with reference to Fig. 12. Fig. 12 shows a system comprising a plurality of cameras 3 and one or more robot elements 4 preferably comprised in one or more devices 10 as disclosed with reference to Fig. 11. For example, one or more robot elements 4 comprised in one device 10 and/or one or more robot elements 4 each comprised in one or more devices 10.

The plurality of cameras 3 are positioned at different respective angles with respect to the object 1 and electrically connected to the one or more devices 10. Preferably, the plurality of cameras 3 are electrically connect to the processor 5 in each of the one or more devices 10.

The system may comprise a light source 9 for improving the capturing of at least two images 30 by the plurality of cameras 3. The light source 9 may be any one or combination of a key light, a fill light and a back light (e.g. three-point lighting). A size and/or intensity of the light source 9 may be determined relative to a size of the object 1. A position of the light source 9 may be positioned relative to a position of the object 1 and/or the plurality of cameras 3. A combination of any of the size, intensity and position of the light source 9 may dictate how "hard" (i.e., shadows with sharp, distinctive edges) or "soft" (shadows with smooth feathered edges) shadows relating to the object 1 will be.

In the embodiment of Fig. 12, the object 1 is provided, for e.g. by means of a conveyor belt or other transport means known in the art (as shown in two images 30 in Fig. 3), in a direction corresponding to, for e.g., a direction from an input of the system to an output of the system (shown as an arrow in Fig. 12). As shown in Fig. 12, the object 1 is provided to a first part of the system wherein the plurality of cameras are positioned. Thereafter, the object 1 is provided to a second part wherein a robot element 4 is configured to handle the object 1. The system may comprise a plurality of second parts each comprising a robot element 4 and a device 10, as shown in Fig. 12.

In embodiments, at least one of said plurality of cameras 3 is a hyperspectral camera, wherein said computing of said robot command is further based on values of pixels whereof at least the intensity is determined based on hyperspectral image information. This may lead to enhanced performance and/or robustness for applications wherein part of the 3D surface information of the object 1 may be obtained outside of the visual spectrum. This is particularly advantageous in cases wherein the object 1 comprises a portion of a plant, enabling plant health evaluation and plant disease detection, wherein use of hyperspectral cameras allows earlier detection of plant diseases compared to the standard RGB imaging. This relates to the fact that healthy and affected plant tissue show different spectral signatures, due to different water content, wall cell damage and chlorophyll concentration of plants. In preferred embodiments, the spectral band processed by the one or more hyperspectral cameras does not comprise the entire visible spectral band, as this may optimize processing time. In embodiments, RGB imaging is used additionally or alternatively to determine plant health (e.g., plant diseases, etc.).

In embodiments, the processed spectral band is obtained by shifting the visible spectral band. In embodiments, a frequency shift or, equivalently, a wavelength shift is performed such that the processed spectral band overlaps at least partially with the near infrared band between 700 nm and 2500 nm, and/or the near infrared band between 428 THz and 120 THz. This corresponds to infrared bands with particular relevance for plant health. In embodiments, this relates to a wavelength shift of at least 10%, more preferably at least 50% and/or preferably by applying a wavelength offset of at least 100 nm, more preferably at least 500 nm.

In embodiments, the plurality of cameras 3 located at a plurality of camera positions may be replaced by a single camera shooting images from each of the plurality of camera positions. Such embodiments may involve a switch-over time for the camera to move from one camera position to the next camera position, which may increase the latency in acquiring. This may have the advantage of cost reduction, using a single camera instead of several cameras.

In embodiments, the plurality of cameras 3 located at a plurality of camera positions may be replaced by a single camera shooting images of the object 1 according to a plurality of object positions. In such embodiments, the object 1 may be movingly, e.g., rotatably, positioned with respect to the single camera. Such embodiments may involve a switch-over time for the object to move from one object position to the next object position, which may increase the latency in acquiring images. This may have the advantage of cost reduction, using a single camera instead of several cameras.

## Claims

1. A method for generating a robot command (2) for handling a three-dimensional, 3D, physical object (1) present within a reference volume, the object (1) comprising a main direction and a 3D surface, the method comprising:
- obtaining (11) at least two images (30) of the object (1) from a plurality of cameras (3) positioned at different respective angles with respect to the object (1);
- generating (15), with respect to the 3D surface of the object (1), a voxel representation segmented based on the at least two images (30), said segmenting being performed by means of at least one segmentation NN, preferably comprising at least one semantic segmentation NN, trained with respect to the main direction;
- determining the main direction based on the segmented voxel representation; and
- computing (18) the robot command (2) for the handling of the object (1) based on the segmented voxel representation and the determined main direction,
wherein the robot command (2) is computed (18) based on the determined main direction of the object (1) relative to the reference volume,
wherein the robot command (2) is executable by means of a device comprising a robot element (4) configured for handling the object (1).

2. The method according to claim 1, wherein the generating (15) comprises:
- determining one or more protruding portions associated with the main direction, wherein the determining of the main direction is based further on the determined one or more protruding portions.

3. The method according to any of claim 1 and claim 2, wherein the main direction is determined with respect to a geometry of the 3D surface, preferably a point corresponding to a center of mass or a centroid of the object (1).

4. The method according to any of claims 1-3, further comprising:
- determining a clamping portion for clamping the object (1) by means of the robot element (4),
wherein the handling comprises clamping the object (1) based on the clamping portion.

5. The method according to any of claims 1-4, wherein the handling of the object (1) by the robot command (2) is performed with respect to another object (3) being a receiving object for receiving the object (1), preferably circumferentially surrounding at least a portion of the object (1).

6. The method according to claim 5, wherein the receiving object (3) comprises a receiving direction for receiving the object (1),
wherein the determining of the clamping portion is based on the main direction of the object (1) and the receiving direction of the receiving object (3),
wherein the handling comprises orienting the object (1) with respect to the main direction of the object (1) and the receiving direction of the receiving object (3).

7. The method according to any of claims 1-6, wherein the object (1) relates to a plant,
wherein the main direction is a growth direction of the plant,
wherein the determining of the main direction is based on an indication of a growth direction provided by the 3D surface.

8. The method according to any of claims 1-7, wherein the generating (15) comprises:
- 2D segmenting (14) the at least two images (30) by means of said at least one trained semantic segmentation NN being a 2D convolutional neural network, CNN, for determining one or more segment components corresponding to protruding portions of the object (1) in each of the at least two images (30);
- performing (13) a 3D reconstruction of the 3D surface of the object (1) based at least on the at least two images for obtaining a voxel representation;
- obtaining said segmented voxel representation by projecting said one or more segment components with respect to said voxel representation;
wherein preferably said obtaining of said segmented voxel representation comprises determining a first portion of the protruding portions associated with the main direction; and/or
wherein preferably said 2D segmenting (14) and said projecting relates to confidence values with respect to said segment components being protruding portions, and said determining of the main direction is based on determining a maximum of said confidence, and/or
wherein preferably the obtaining of said segmented voxel representation comprises performing clustering with respect to said projected one or more segment components.

9. The method according to any of claims 1-8, wherein the generating (15) comprises:
- performing (13) a 3D reconstruction of the 3D surface of the object (1) based on the at least two images (30) for obtaining a voxel representation;
- 3D segmenting (14) said voxel representation by means of said at least one semantic segmentation NN being a 3D CNN trained with respect to the main direction;
- obtaining said segmented voxel representation by determining one or more segment components corresponding to protruding portions of the object (1) in the voxel representation;
wherein preferably said obtaining of said segmented voxel representation comprises determining a first portion of the protruding portions associated with the main direction.

10. The method according to claim 9, wherein said performing (13) of said 3D reconstruction comprises determining RGB values associated with each voxel based on said at least two images, wherein said 3D segmenting (14) is performed with respect to said voxel representation comprising said RGB values by means of a NN trained with RGB data.

11. The method according to any of claims 8-10, further comprising:
- obtaining a training set relating to a plurality of training objects (33; 40), each of the training objects comprising a 3D surface similar to the 3D surface of said object (1), the training set comprising at least two images for each training object;
- receiving manual annotations (331; 401) with respect to said main direction from a user for each of the training objects via a GUI (101); and
- training, based on said manual annotations (331; 401), at least one NN, for obtaining said at least one trained NN,
wherein, for each training object, said receiving of manual annotations relates to displaying an automatically calculated centroid for each object and receiving a manual annotation being a position for defining said main direction extending between said centroid and said position, wherein preferably, for each training object, said manual annotation is the only annotation to be performed by said user.

12. The method according to any of claims 1-11, further comprising:
- pre-processing (12) the at least two images (30), wherein the pre-processing comprises at least one of largest component detection, background subtraction, mask refinement, cropping and re-scaling; and/or
- post-processing (16) the segmented voxel representation in view of one or more semantic segmentation rules relating to one or more segment classes with respect to the 3D surface.

13. A device for handling a three-dimensional, 3D, physical object (1) present within a reference volume, the object (1) comprising a main direction and a 3D surface, the device (10) comprising a robot element (4), a processor (5) and memory (6) comprising instructions which, when executed by the processor (5), cause the device (10) to execute a method according to any of claims 1-12.

14. A system for handling a three-dimensional, 3D, physical object (1) present within a reference volume, the object (1) comprising a main direction and a 3D surface, the system comprising:
- a device (10), preferably the device (10) according to claim 13;
- a plurality of cameras (3) positioned at different respective angles with respect to the object (1) and connected to the device (10); and
- a robot element (4) comprising actuation means and connected to the device (10),
wherein the device is configured for:
- obtaining (11), from the plurality of cameras (3), at least two images (30) of the object (1);
- generating (15), with respect to the 3D surface of the object (1), a voxel representation segmented based on the at least two images (30), said segmenting being performed by means of at least one segmentation NN, preferably comprising at least one semantic segmentation NN, trained with respect to the main direction;
- determining a main direction based on the segmented voxel representation;
- computing (18) the robot command (2) for the handling of the object (1) based on the segmented voxel representation; and
- sending the robot command (2) to the robot element (4) for letting the robot element (3) handle the object (1),
wherein the plurality of cameras (3) is configured for:
- acquiring at least two images (30) of the object (1); and
- sending the at least two images (30) to the device (10),
wherein the robot element (4) is configured for:
- receiving the robot command (2) from the device (10); and
- handling the object (1) using the actuation means,
wherein the robot command (2) is computed (18) based on the determined main direction of the object (1) relative to the reference volume,
wherein the robot command (2) is executable by means of a device comprising a robot element (4) configured for handling the object (1).

15. A non-transient computer readable medium containing a computer executable software which when executed on a device, preferably the device according to claim 14, performs the method of any one of claims 1-12.
